Europäisches Patentamt

European Patent Office

Office européen des brevets

(11) Publication number: **0 210 737**

A1

# EUROPEAN PATENT APPLICATION

(21) Application number: **86304561.3**

(22) Date of filing: **13.06.86**

(51) Int. Cl.⁴: **G 01 F 11/28**
**B 65 G 53/46, F 23 K 3/02**

(30) Priority: **05.07.85 GB 8517066**

(43) Date of publication of application:
**04.02.87 Bulletin 87/6**

(84) Designated Contracting States:
**BE DE FR IT NL**

(71) Applicant: **Coal Industry (Patents) Limited**
**Hobart House Grosvenor Place**
**London SW1X 7AE(GB)**

(72) Inventor: **Robertson, Andrew John**
**23 Hillview Lane**
**Tewkesbury Gloucestershire(GB)**

(74) Representative: **Wood, John Irwin**
**Hobart House Grosvenor Place**
**London SW1X 7AE(GB)**

(54) Pneumatic feeder system.

(57) A pneumatic feeder system (1) includes a pressure vessel (2) coupled to a telescopic metering pipe (18) having a first ball valve (14) at its entry and a second ball valve (22) at its exit, the second ball valve being perforated at (26) to provide a vent. The volumetric capacity of pipe (18) is variable and deter- mines the quantity of material to be fed in a slug form through a conveying pipe to the point of use, an air knife or injector (16) being provided to propel the charge of material from the met- ering pipe along the conveying pipe.

FIG 1

EP 0 210 737 A1

1     CASE 4786

IMPROVEMENTS IN OR RELATING TO PNEUMATIC FEEDER SYSTEMS

This invention concerns improvements in or relating to pneumatic feeder systems.

The present invention has particular reference to such systems of the type disclosed in co-pending U.K. Patent Application No. 84 26130 which is directed to a pneumatic feeder system including _inter alia_ two valves separated by a metering pipe of predetermined size to give a fixed volume (slug) of material delivered pneumatically from the system. The feed rate, for example to a boiler, is determined by the product of the minimum cycle time for one slug and the maximum size of slug that can be tolerated at turndown.

It has been realised that when operating at full load, the boiler could tolerate a larger size of slug, but the fixed volume of the current system precludes variability in that respect.

The object of the invention is to provide a pneumatic feeder system having a variable delivery capability.

Accordingly the invention provides a pneumatic feeder system including a pressure vessel, an inlet to the vessel, a valve associated with the inlet, an outlet from the vessel, a metering pipe coupled to the outlet, a first valve associated with the metering pipe at the entry thereto, a second valve downstream of the first valve at the exit from the metering pipe, a vent arranged in the second valve, wherein at least one variable volume section is provided between the outlet from the pressure vessel and the downstream side of the second valve.

Preferably, the variable volume section is constituted by a telescopic section formed as at least part of the metering pipe thereby permitting the length and thus the volume of the pipe to be varied. Expansion and contraction of the telescopic section is conveniently achieved by the use of a double-acting pneumatic ram. The whole of the metering pipe may be constructed to telescope one part in another.

In one embodiment the connections, e.g. tubing, between the outlet from the pressure vessel and the first valve and downstream of the second valve may be of a flexible character to compensate for the movement of the telescopic section.

In an alternative embodiment used when flexible tubing is inappropriate or difficult to deploy, the telescopic section within the length of the metering pipe is complemented by a further telescopic section either upstream of the first valve or downstream of the second valve to compensate for the expansion/contraction of the telescopic metering section. In this instance, expansion of the telescopic metering section is accompanied by corresponding contraction of the further telescopic section.

The minimum length of the metering pipe is determined by the maximum permissible size of material slug which is dictated in practice by turndown in the case of direct fuel boiler feed. As boiler load increases, the slug size of fuel feed can be increased, thereby allowing variable fuel feed.

By way of example, one embodiment of a pneumatic feeder system according to the invention is described below with reference to the accompanying drawings in which:

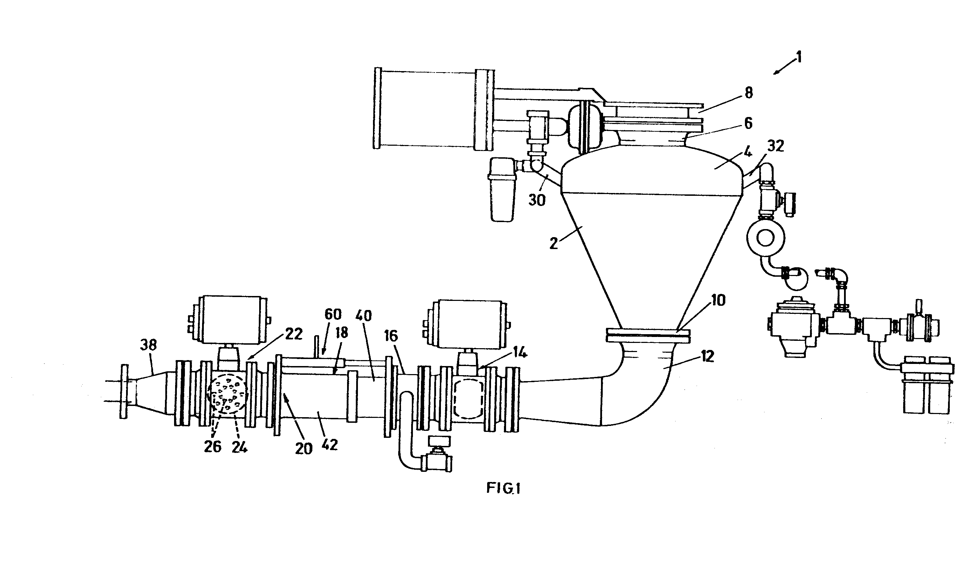

Figure 1 is a general arrangement of the system;

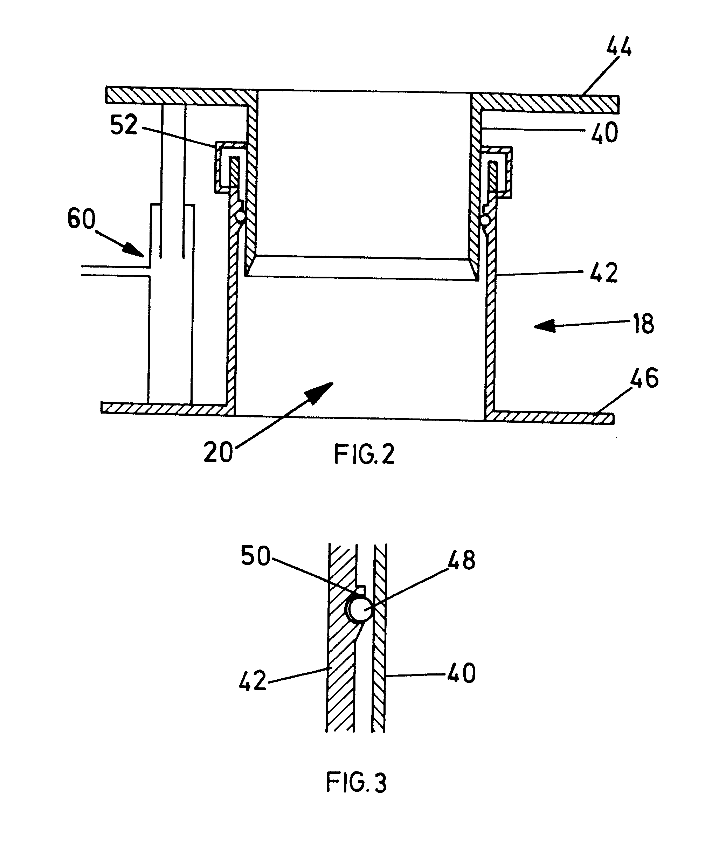

Figure 2 is a vertical section of a component of the system shown in Figure 1; and

Figure 3 is a scrap view of a detail shown in Figure 2.

Referring to the drawings, a pneumatic feeder system shown generally at 1 includes a pressure vessel 2 of inverted hollow frusto - conical form having a domed cap 4 incorporating an inlet 6 with which is associated a solenoid controlled pneumatic charging valve 8. The pressure vessel 2 has a flanged outlet 10 coupled via an elbow joint 12 to a solenoid controlled pneumatically operable ball valve 14 adjacent to which and downstream thereof is an air injector 16.

A metering pipe 18 is coupled to the injector and has located at its exit 20 a second solenoid controlled pneumatically operable ball valve 21, the ball 24 of which is perforated as at 26 to provide a vent integral with the valve mechanism. The metering pipe 18 is comprised of two telescopically interengaging lengths of flanged tubes 40, 42, the flange 44 of tube 40 being secured to the

4    0210737

injector 16 and the flange 46 of tube 42 being secured to the second ball valve 22. A seal 48 is located in a groove 50 formed on the internal surface of the tube 42 and contacts the outer surface of the tube 40. A labyrinth type gland 52 is located as shown to prevent movement of contaminating matter between the inside and the outside of the pipe 18. A fluid operable actuating ram 60 is interposed between the flanges 44 and 46 and is preferably double-acting. The ram 60 is conveniently pneumatically operable and more than one ram may be provided.

In operation, discrete material, for example particulate coal which may be that designated 'smalls', i.e. 25mm to zerio in size, is introduced into the vessel 2 through inlet 6, the valve 8 having been opened as a first step in the cycle. After the vessel has been filled with the coal, the valve 8 is closed and the vessel is pressurised pneumatically through lines 30, 32. As a result, the coal moves down within the vessel 2 to fill the elbow joint 12. Whilst the pressurisation is maintained, the first ball valve 14 is opened and coal is forced through the valve into the metering pipe 18, the coal abutting the ball 24 of the second valve 22 and the conveying air venting through the perforations 26. The metering pipe 18 is thus completely filled with a specific volume and thus weight of coal. The first ball valve 14 is then closed against the head of coal leaving the metered quantity of coal in the pipe 18. The second ball valve 22 is then opened and compressed air is introduced through the injector 16 to impel the coal slug along the conveying pipeline (not shown) which is attached via a reducer 38 to the discharge side of the second ball valve 22.

The valve 22 is then closed and the cycle is repeated at preset intervals as required to give an accurate feed of a predetermined quantity of coal on each occasion. The quantity of coal delivered is determined by the length of the metering pipe 18 and in the case of a boiler operating on turndown, the minimum length, i.e. that on full contraction of the tubes 40, 42, is employed. If the demand on the boiler increases, the size of the coal slug contained within the metering pipe can be increased by expanding the pipe 18. In this connection, the ram 60 is pressurised to cause extension and accordingly the tubes 40, 42 move telescopically to vary the length of the pipe 18, the stroke of the ram determining the degree of flexibility in changing the slug size.

PATENT CLAIMS:

1. A pneumatic feeder system (1) including a pressure vessel (2), an inlet (6) to the vessel (2), a valve (8) associated with the inlet (6), an outlet (10) from the vessel (2), a metering pipe (18) coupled to the outlet (10), a first valve (14) associated with the metering pipe (18) at the entry thereto, a second valve (21) downstream of the first valve (14) at the exit from the metering pipe (18), a vent (26) arranged in the second valve (21) characterised in that at least one variable volume section (40, 42) is provided between the outlet (10) from the pressure vessel (2) and the downstream side of the second valve (21).

2. A system according to claim 1, characterised in that the variable volume section is constituted by a telescopic section (40, 42) formed as at least part of the metering pipe (18) thereby permitting the length and the volume of the pipe (18) to be varied.

3. A system according to claim 2, characterised in that a fluid operable ram (60) is provided to effect expansion and contraction of the telescopic section (40, 42).

FIG.1

0210737

FIG.2

FIG.3

European Patent Office

**EUROPEAN SEARCH REPORT**

| | DOCUMENTS CONSIDERED TO BE RELEVANT | | EP 86304561.3 |

| Category | Citation of document with indication, where appropriate, of relevant passages | Relevant to claim | CLASSIFICATION OF THE APPLICATION (Int Cl 4) |
|---|---|---|---|
| Y | CH - A - 170 394 (HEPHAEST)<br>* Fig. 1 *<br><br>-- | 1,2 | G 01 F 11/28<br>B 65 G 53/46<br>F 23 K 3/02 |
| Y | US - A - 2 588 206 (CLARK)<br>* Fig. 1,2,4; column 2, lines 6-16 *<br><br>---- | 1,2 | |
| | | | TECHNICAL FIELDS SEARCHED (Int. Cl.4) |
| | | | G 01 F 11/00<br>B 65 G 53/00<br>F 23 K 1/00<br>F 23 K 3/00<br>F 23 N 1/00 |

The present search report has been drawn up for all claims

| Place of search | Date of completion of the search | Examiner |
|---|---|---|
| VIENNA | 09-10-1986 | BURGHARDT |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82